# EUROPÄISCHE PATENTSCHRIFT

(11) **EP 1 672 327 B1**
(45) Veröffentlichungstag und Bekanntmachung des Hinweises auf die Patenterteilung: **13.01.2016**
(21) Anmeldenummer: 05020999.8
(22) Anmeldetag: 27.09.2005
(51) Int. Cl.: G01D 11/24, G01D 5/347

(54) **Winkelmesseinrichtung**
Angle measuring device
Dispositif de mesure d'angle

(30) Priorität: 17.12.2004 DE 102004060864
(43) Veröffentlichungstag der Anmeldung: 21.06.2006
(73) Patentinhaber: Dr. Johannes Heidenhain GmbH, 83292 Traunreut (DE)
(72) Erfinder: Riepertinger, Sebastian, 83139 Söchtenau (DE)

(56) Entgegenhaltungen:
- EP-A1- 0 776 065
- US-A- 5 708 496

## Beschreibung

Die Erfindung betrifft eine Winkelmesseinrichtung gemäß dem Patentanspruch 1.

Winkelmesseinrichtungen, häufig auch Drehgeber genannt, dienen zur Messung von Drehbewegungen eines drehbar gelagerten Körpers, insbesondere einer Welle, über eine oder mehrere Umdrehungen (Multiturn-Funktionsweise). Die Drehbewegung wird dabei inkremental oder absolut erfasst. In Verbindung mit Zahnstangen und Zahnrädern oder mit Gewindespindeln lassen sich mit einer Winkelmesseinrichtung auch lineare Bewegungen messen.

Über Anschlusskabel werden der Winkelmesseinrichtung eine Betriebsspannung zugeführt und die Messsignale abgenommen und an eine Folgeelektronik weitergeleitet. Hierzu ist bei bekannten Winkelmesseinrichtungen an einer Kappe der Winkelmesseinrichtung eine Öffnung vorgesehen, durch die hindurch das Anschlusskabel der Winkelmesseinrichtung zugeführt und dort mit einer geeigneten elektrischen Anschlusseinheit kontaktiert werden kann.

Eine Winkelmesseinrichtung der eingangs genannten Art ist aus der US 5,708,496 bekannt.

Der Erfindung liegt die Aufgabe zugrunde, eine Winkelmesseinrichtung der eingangs genannten Art zu schaffen, die mit einfachen Mitteln eine zuverlässige und schnelle Montage ermöglicht, wobei die Winkelmesseinrichtung gegenüber der Umgebung gut abgedichtet werden kann und eine elektrische Kupplung an der Winkelmesseinrichtung zuverlässig arbeitet.

Diese Aufgabe wird erfindungsgemäß durch die Schaffung einer Winkelmesseinrichtung mit den Merkmalen des Patentanspruchs 1 gelöst.

Demnach ist zur Optimierung der Leichtgängigkeit und Funktion einer elektrischen Kupplung sowie zur Verbesserung der Dichtheit der Winkelmesseinrichtung zumindest ein Abstandshalter vorgesehen, mit dessen Hilfe die Kappe relativ zur Leiterplatte derart positioniert ist, dass die Öffnung bezüglich des elektrischen Kupplungselements ausgerichtet ist. Durch diese exakte relative räumliche Zuordnung der Kappe gegenüber der Leiterplatte kann ein hoher Grad an Dichtheit im Bereich der elektrischen Kupplung reproduzierbar erreicht werden.

Ferner weist die Winkelmesseinrichtung Mittel auf durch die letztlich eine bezüglich der Winkellage eindeutige Zuordnung zwischen der Kappe und eines elektrischen Kupplungselements sichergestellt ist. Das vorgenannte Mittel ist beispielsweise eine formschlüssige Verbindung zwischen einem Grundkörper der Winkelmesseinrichtung und der Kappe Alternativ dazu können auch Passstifte direkt an der Kappe angebracht sein (oder Bestandteil der Kappe sein), die mit entsprechenden Bohrungen in der Leiterplatte eine winkeltreue Montage bedingen. Hier weist also die Kappe Elemente auf, welche mit der Leiterplatte derart zusammenwirken, dass eine relative Winkellage zwischen Kappe und der Leiterplatte durch einen Formschluss festlegbar ist.

Häufig sind derartige Winkelmesseinrichtung Bestandteil eines Datennetzwerkes, z.B. mit einer Ethernet-Architektur, an das sie Messdaten liefern aber auch von diesem Daten empfangen. Deshalb werden in diesem Zusammenhang als elektrische Kupplungselemente oft bekannte Netzwerkstecker bzw. Netzwerkbuchsen verwendet, beispielsweise so genannte RJ45-Stecker bzw. entsprechende Buchsen.

Gemäß einem weiteren Aspekt der Erfindung umfasst die Winkelmesseinrichtung zumindest ein zusätzliches Kontaktelement zur Herstellung einer elektrischen Verbindung mit einer oder mehreren Signalleitungen. Das Kontaktelement ist derart ausgestaltet, dass die Winkelmesseinrichtung als Ganzes in zumindest zwei unterschiedlichen Einbaulagen funktionsgleich anbaubar ist. Zu diesem Zweck können die entsprechenden Kontaktelemente als Ringkontakte ausgeführt sein. Gemäß einer vorteilhaften Variante können weiterhin die Kontaktelemente als Blechteile ausgestaltet sein. Alternativ dazu können die Kontaktelemente auch durch Leiterbahnen oder Pads auf einer Leiterplatte, die sich im Endbereich der Winkelmesseinrichtung befindet, definiert werden.

Mit Vorteil ist das Ende der externen Signalleitung, welches mit dem Kontaktelement zusammenwirkt als federndes Bauteil ausgestaltet, um eine zuverlässige elektrische Kontaktierung zu ermöglichen.

Zusätzliche vorteilhafte Ausgestaltungen der Erfindung sind den abhängigen Ansprüchen zu entnehmen.

Weitere Merkmale und Vorteile der Erfindung werden bei der nachfolgenden Beschreibung eines Ausführungsbeispiels anhand der Figuren deutlich werden.

Es zeigen:
- Figur 1: eine perspektivische Schnitt-Ansicht einer Winkelmesseinrichtung,
- Figur 2: eine perspektivische Ansicht der Winkelmesseinrichtung,
- Figur 3: eine perspektivische Ansicht der Winkelmesseinrichtung, mit aufgeschnittener Kappe,
- Figur 4: eine weitere perspektivische Schnitt-Ansicht der Winkelmesseinrichtung,
- Figur 5: eine weitere perspektivische Ansicht der Winkelmesseinrichtung mit aufgeschnittener Kappe.

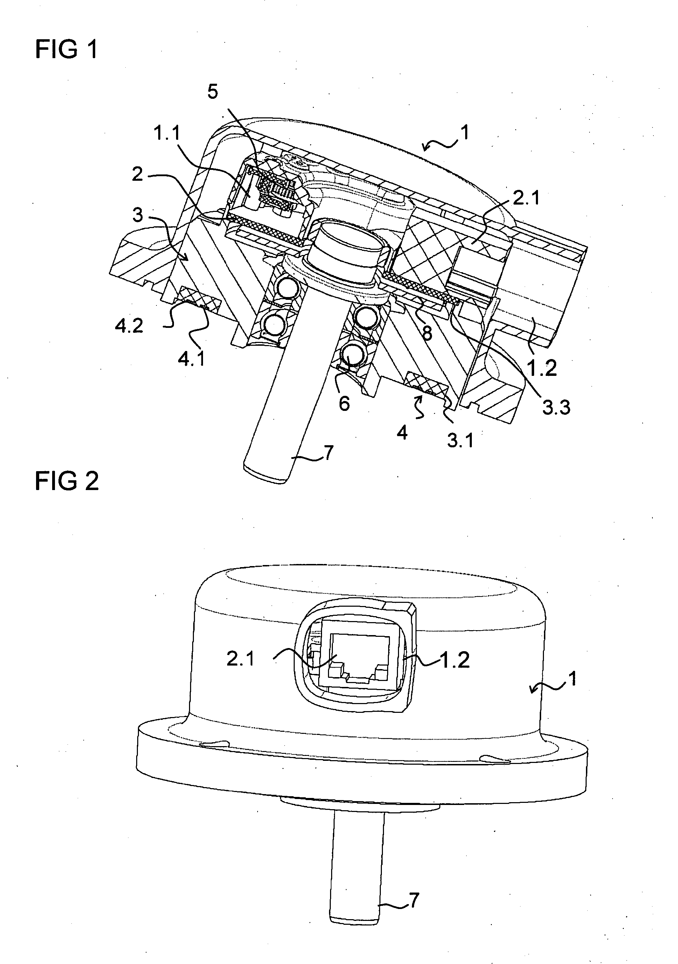

Die in den Figuren 1 bis 5 dargestellte Winkelmesseinrichtung weist eine Welle 7 zum Anschluss an einen zu messenden Körper auf. Die Winkelmesseinrichtung selbst wird über eine Kappe 1 an einem weiteren Körper mit Hilfe von Flanschbohrungen 1.4 befestigt. Der zu messende Körper ist beispielsweise eine Motorwelle und der weitere Körper ein stationäres Motorgehäuse. Winkelmesseinrichtungen, die für diese Anwendungen konzipiert sind werden auch häufig als Drehgeber bezeichnet. Im gezeigten Ausführungsbeispiel ist die Winkelmesseinrichtung so konstruiert, dass deren Kappe 1 nach dem Anbau an ein Motorgehäuse einen Teil der Außenkontur des Motors bildet. Mit anderen Worten wird die Winkelmesseinrichtung nicht von einem weiteren Gehäuseteil umgeben, sondern bildet nach erfolgter Montage mit die äußere Kontur des Motors.

Die Winkelmesseinrichtung umfasst einen Grundkörper 3, welcher eine Ausnehmung 3.1 aufweist, in der ein ringförmiger elektrisch nicht-leitender Isolierkörper 4 eingelegt ist. In diesem Isolierkörper befinden sich ein erster Ringkontakt 4.1 und ein zweiter Ringkontakt 4.2, welche aus einem elektrisch leitfähigen Material bestehen. Die Ringkontakte 4.1, 4.2 sind bezüglich der Welle 7 konzentrisch angeordnet.

In bekannter Weise ist die Welle 7 im Grundkörper 3 mit Hilfe von Lagern 6 drehbar gelagert, wobei an der Welle 7 eine im Inneren der Winkelmesseinrichtung angeordneten Codescheibe 8 befestigt ist und die Welle 7 über ein Getriebe 5 eine oder mehrere weitere Codescheiben antreibt. Durch das Getriebe 5 und die weiteren Codescheiben wird eine Multiturn-Funktionsweise der Winkelmesseinrichtung erreicht.

Die Codescheibe 8 wird im gezeigten Beispiel lichtelektrisch von einer Abtasteinrichtung abgetastet. Entsprechende lichtempfindliche Detektoren befinden sich auf einer Leiterplatte 2, auf der unter anderem elektrische Bauelemente zur Signalformung - beispielsweise zur Verstärkung und Digitalisierung - der von den Detektoren gelieferten Abtastsignalen angeordnet sind. Auf der Leiterplatte befindet sich neben dieser Messelektronik weiterhin ein elektrisches Kupplungselement, im vorgestellten Ausführungsbeispiel eine Buchse 2.1 durch welche im vorgestellten Ausführungsbeispiel ein RJ45 Stecker aufgenommen werden kann. Die Buchse 2.1 ist passgenau auf der Leiterplatte 2 positioniert.

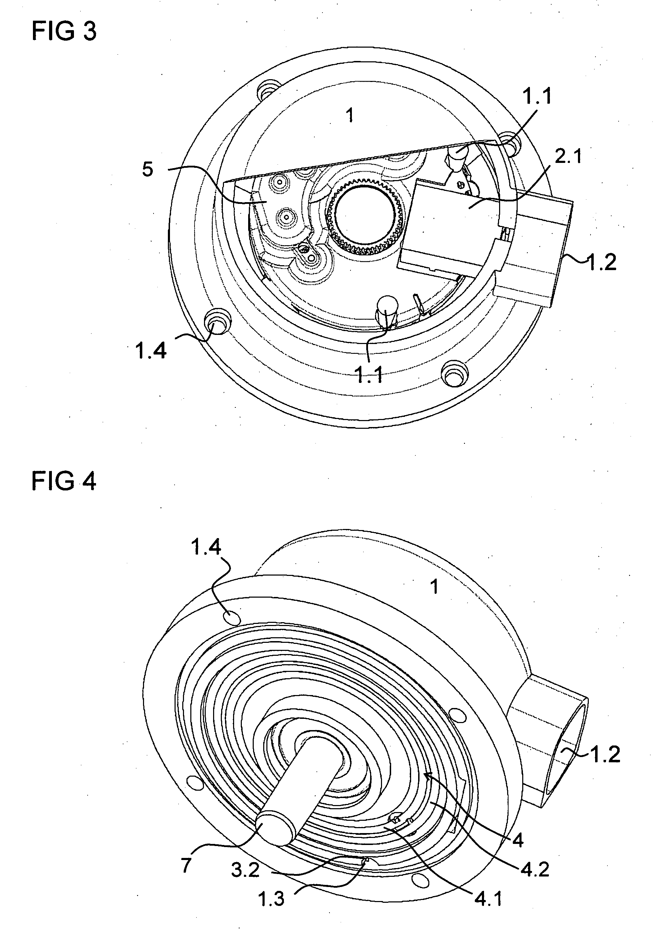

Zum Schutz der Winkelmesseinrichtung und ihrer Messelektronik ist die topfförmige Kappe 1 vorgesehen, welche über den Umfang klemmend am Grundkörper 3 befestigt ist. Im dargestellten Beispiel ist diese Verbindung eine Pressverbindung. Damit eine bezüglich der Winkellage eindeutige Zuordnung zwischen der Kappe 1 und dem Grundkörper 3 sichergestellt ist, weist der Grundkörper eine Pass-Ausnehmung 3.2 auf. Beim Zusammenbau wird die Kappe 1 so ausgerichtet, dass eine Nase 1.3 von der Pass-Ausnehmung 3.2 aufgenommen wird (Fig. 4). Ferner weist die Kappe 1 als integrale Bestandteile drei Abstandshalter 1.1 sowie eine Öffnung 1.2 auf. Die Kappe 1 ist im vorgestellten Ausführungsbeispiel als ein Gussteil ausgestaltet, wobei zur Erhöhung der Maßgenauigkeit der Länge der Abstandshalter 1.1 deren Endflächen spanabhebend bearbeitet wurden. Auf diese Weise wird eine überaus genaue Lage der Endflächen der Abstandshalter 1.1 in Bezug auf die Öffnung 1.2 erreicht.

Durch die Öffnung 1.2 kann ein entsprechender Stecker in die Buchse 2.1 eingeschoben werden. Die Wandung der Öffnung 1.2 dient gleichzeitig als Führung für den Stecker.

Derartige Winkelmesseinrichtungen bzw. Drehgeber werden häufig in vergleichsweise rauen Industrieumgebungen eingesetzt, weshalb es wichtig ist, dass die Kappe 1 den Innenraum der Winkelmesseinrichtung dicht umschließt. Gerade der Bereich der Steckverbindung bzw. der Öffnung 1.2 und der Buchse 2.1 ist in diesem Zusammenhang kritisch. Ein hoher Grad an Dichtheit in diesem Bereich ist nicht zu erreichen, wenn die Lage der Buchse 2.1 relativ zur Öffnung 1.2 in der Kappe 1 zu große Toleranzen aufweist.

Wie bereits erwähnt, wird die Buchse 2.1 passgenau auf der Leiterplatte 2 platziert, jedoch weist die Leiterplatte 2 selbst bezüglich ihrer Ebenheit und Dicke Toleranzen auf. Diese Toleranzen sind vergleichsweise groß. Deshalb würde bei herkömmlichen Bauarten durch die als Führung dienende Öffnung 1.2 der Stecker im Allgemeinen schräg bzw. verkantet relativ zur Buchse 2.1 positioniert werden. Diese Verkantung kann so groß sein, dass die Steckverbindung nicht herstellbar ist, oder elektrisch unzuverlässige Kontakte erzeugt. Darüber hinaus können, wenn eine Steckverbindung noch herstellbar ist, Spaltöffnungen im Bereich der Steckverbindung entstehen, welche in Undichtigkeiten resultieren.

Eine exakte räumliche Zuordnung zwischen der Buchse 2.1 und der Öffnung 1.2 wird nunmehr dadurch erreicht, dass die Abstandshalter 1.1 sich auf der Leiterplatte 2 abstützen. Die Leiterplatte 2 ruht ihrerseits auf einem Leiterplattenauflager, das im gezeigten Ausführungsbeispiel als ein umlaufender Absatz 3.3 im Grundkörper 3 ausgebildet ist. Auf diese Weise werden die Dickentoleranzen der Leiterplatte 2 ausgeglichen, so dass in Richtung der Achse der Welle 7 die Öffnung 1.2 exakt in der richtigen Position bezüglich der Buchse 1.2 platziert ist.

Darüber hinaus ist der Grundkörper 3 konstruktiv so ausgestaltet, dass die Leiterplatte 2 nur in einer bestimmten Winkellage (bezüglich der Achse der Welle 7) in der Winkelmesseinrichtung montiert werden kann. Hinzu kommt, dass durch die Pass-Ausnehmung 3.2 und die Nase 1.3, wie bereits erwähnt, eine bezüglich der Winkellage eindeutige Zuordnung zwischen der Kappe 1 und dem Grundkörper 3 sichergestellt. Somit wird auch in tangentialer Richtung ein passgenauer Anbau des Steckers an der Buchse 2.1 erreicht.

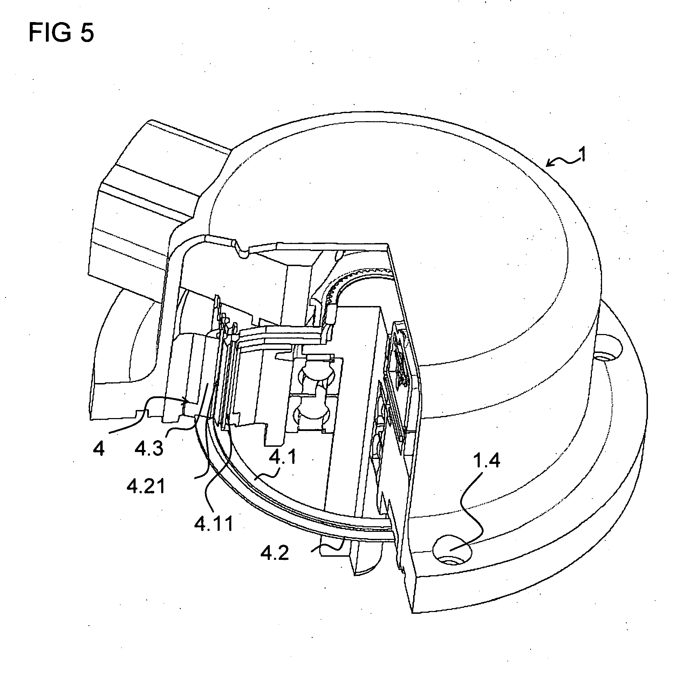

Häufig sind aber derartige Winkelmesseinrichtungen bzw. Drehgeber nicht nur durch die Steckverbindung, für welche die Buchse 2.1 vorgesehen ist, mit der Umgebung verbunden. Darüber hinaus werden nämlich oft auch den Winkelmesseinrichtungen durch separate, von außen kommende, Signalleitungen Signale zugeführt. Diese Signale können beispielsweise von einem Temperaturfühler des Motors stammen, an dem die Winkelmesseinrichtung bzw. die Kappe 1 angeflanscht ist. Gemäß den Figuren 4 und 5 sind an der Unterseite der Winkelmesseinrichtung zwei umlaufende Ringkontakte 4.1, 4.2 angeordnet. Diese dienen dazu mit (in den Figuren nicht dargestellten) federnden Kontaktelementen eines Temperaturausgangs des Motors zusammenzuwirken. Die Winkelmesseinrichtung ist dabei so ausgestaltet, dass sie in unterschiedlichen Winkellagen - je nach erforderlicher Kabelabgangsrichtung - am Motorgehäuse angeflanscht werden kann, und dabei aber trotzdem eine Kontaktierung der Signalausgänge des Motors möglich ist. Mit anderen Worten treffen die Kontaktelemente des Temperaturausgangs des Motors stets auf die Ringkontakte 4.1, 4.2 der Winkelmesseinrichtung, unabhängig davon in welcher Winkellage die Winkelmesseinrichtung am Motor angeflanscht wurde.

Die Ringkontakte 4.1, 4.2 sind jeweils als einstückige Blechteile ausgestaltet, die mit einer vergoldeten Schicht versehen sind. Achsparallel zur Welle 7 ausgerichtet sind Blechstreifen 4.11, 4.12, welche jeweils ein Bestandteil der Ringkontakte 4.1, 4.2 sind. Der Isolierkörper 4 ist so ausgestaltet, das dieser einen Bereich 4.1 aufweist, welcher innerhalb des Grundkörpers 3 achsparallel zur Welle 7 ausgerichtet ist und die Blechstreifen 4.11, 4.12 aufnimmt. Die Blechstreifen 4.11, 4.12 enden an der Leiterplatte 2 und sind dort an entsprechenden Leiterbahnen kontaktiert. Die Temperatursignale werden dann in entsprechenden Schaltungen auf der Leiterplatte 2 weiterverarbeitet und über die Buchse 2.1 als digitale Werte ggf. auch als analoge Signale ausgegeben.

## Patentansprüche

1. Winkelmesseinrichtung umfassend
- eine Kappe (1) mit einer Öffnung (1.2), welche zur Führung eines Steckers ausgebildet ist,
- einen Grundkörper (3),
- eine Leiterplatte (2), auf der ein elektrisches Kupplungselement (2.1) fixiert ist und
- zumindest einen Abstandshalter (1.1)
wobei mit Hilfe des zumindest einen Abstandshalters (1.1) die Kappe (1) relativ zur Leiterplatte (2) derart positioniert ist, dass die Öffnung (1.2) bezüglich des elektrischen Kupplungselements (2.1) ausgerichtet ist, **dadurch gekennzeichnet, dass**
die Kappe (1) Elemente aufweist, welche mit der Leiterplatte (2) derart zusammenwirken, dass eine relative Winkellage zwischen der Kappe (1) und der Leiterplatte (2) durch einen Formschluss festlegbar ist, so dass eine eindeutige Zuordnung der relativen Winkellage zwischen Kappe (1) und Leiterplatte (2) durch den Formschluss erreicht wird.

2. Winkelmesseinrichtung gemäß dem Anspruch 1, wobei der zumindest eine Abstandshalter (1.1) ein integraler Bestandteil der Kappe (1) ist.

3. Winkelmesseinrichtung gemäß dem Anspruch 1 oder 2, wobei der Grundkörper (3) ein Leiterplattenauflager (3.3) umfasst, und die Leiterplatte (2) zwischen dem zumindest einen Abstandshalter (1.1) und dem Leiterplattenauflager (3.3) angeordnet ist.

4. Winkelmesseinrichtung gemäß dem Anspruch 1, wobei der Grundkörper (3) und die Kappe (1) formschlüssig verbunden sind.

## Claims

1. Angle measuring device comprising
- a cap (1) having an opening (1.2) which is designed to guide a plug,
- a main body (3),
- a printed circuit board (2) on which an electrical coupling element (2.1) is fixed, and
- at least one spacer (1.1),
wherein, with the aid of the at least one spacer (1.1), the cap (1) is positioned relative to the printed circuit board (2) in such a way that the opening (1.2) is aligned with respect to the electrical coupling element (2.1),
**characterized in that**
the cap (1) has elements which interact with the printed circuit board (2) in such a way that a relative angular position between the cap (1) and the printed circuit board (2) can be defined by a positive-locking connection, so that a unique association for the relative angular position between the cap (1) and the printed circuit board (2) is achieved by virtue of the positive-locking connection.

2. Angle measuring device according to Claim 1, wherein the at least one spacer (1.1) is an integral constituent part of the cap (1).

3. Angle measuring device according to Claim 1 or 2, wherein the main body (3) comprises a printed circuit board support (3.3), and the printed circuit board (2) is arranged between the at least one spacer (1.1) and the printed circuit board support (3.3).

4. Angle measuring device according to Claim 1, wherein the main body (3) and the cap (1) are connected in a positively locking manner.

## Revendications

1. Dispositif de mesure d'angle, comprenant :
- une coiffe (1) comprenant une ouverture (1.2), qui est réalisée pour guider un connecteur,
- un corps de base (3),
- une carte à circuits imprimés (2) sur laquelle est fixé un élément d'accouplement électrique (2.1), et
- au moins un élément d'espacement (1.1),
la coiffe (1) étant positionnée par rapport à la carte à circuits imprimés (2) à l'aide de l'au moins un élément d'espacement (1.1) de telle sorte que l'ouverture (1.2) soit alignée par rapport à l'élément d'accouplement électrique (2.1), **caractérisé en ce que**
la coiffe (1) présente des éléments qui coopèrent avec la carte à circuits imprimés (2) de telle sorte qu'une position angulaire entre la coiffe (1) et la carte à circuits imprimés (2) puisse être fixée par un engagement par correspondance géométrique de telle sorte qu'une affectation univoque de la position angulaire relative entre la coiffe (1) et la carte à circuits imprimés (2) soit obtenue par l'engagement par correspondance géométrique.

2. Dispositif de mesure d'angle selon la revendication 1, dans lequel l'au moins un élément d'espacement (1.1) fait partie intégrante de la coiffe (1).

3. Dispositif de mesure d'angle selon la revendication 1 ou 2, dans lequel le corps de base (3) comprend un support de carte à circuits imprimés (3.3) et la carte à circuits imprimés (2) est disposée entre l'au moins un élément d'espacement (1.1) et le support de carte à circuits imprimés (3.3).

4. Dispositif de mesure d'angle selon la revendication 1, dans lequel le corps de base (3) et la coiffe (1) sont connectés par engagement par correspondance géométrique.
